Europäisches Patentamt

European Patent Office

Office européen des brevets

(11) Publication number: **0 124 625**
**B1**

# EUROPEAN PATENT SPECIFICATION

(45) Date of publication of patent specification: **21.03.90**

(51) Int. Cl.⁵: **B 23 H 1/02**

(21) Application number: **83903571.4**

(22) Date of filing: **11.11.83**

(86) International application number:
**PCT/JP83/00407**

(87) International publication number:
**WO 84/01915 24.05.84 Gazette 84/13**

(54) **ELECTRIC DISCHARGE MACHINING CONTROL CIRCUIT.**

(30) Priority: **15.11.82 JP 199043/82**

(43) Date of publication of application:
**14.11.84 Bulletin 84/46**

(45) Publication of the grant of the patent:
**21.03.90 Bulletin 90/12**

(84) Designated Contracting States:
**CH DE FR GB LI**

(56) References cited:
**CH-A- 562 080**
**DE-A-2 362 924**
**FR-A-2 212 210**
**GB-A-1 451 507**
**JP-A-4 998 344**
**JP-A-5 420 496**
**JP-A-5 537 238**
**JP-A-56 009 129**
**JP-B-52 002 836**
**US-A-3 875 362**

**No relevant documents have been disclosed**

(73) Proprietor: **FANUC LTD**
**3580, Shibokusa Aza-Komanba Oshino-mura**
**Minamitsuru-gun Yamanashi 401-05 (JP)**

(72) Inventor: **OBARA, Haruki**
**844-7, Hashimoto Sagamihara-shi**
**Kanagawa 229 (JP)**
Inventor: **IZUMIYA, Shunzo**
**129-408, Guriin Hiru Terada Terada-cho 432**
**Hachiouji-shi Tokyo 193 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to an electric discharge machining control circuit in a wire cut electric discharge machine for performing electric discharge machining using a wire electrode, the electric discharge machining control circuit having a specific circuit for controlling a second cut after a first cut.

In a wire cut electric discharge machine, a predetermined voltage is applied to a gap formed between a wire electrode and a workpiece so as to cause a discharge between the wire electrode and the workpiece, thereby cutting the workpiece by a small amount each time by utilizing discharge energy. Conventionally, after a first machining cut has been performed, a second cut is performed to correct the shape of the workpiece, smooth the roughened surface, and remove any irregularities caused by the machining. Such a technique is disclosed in Japanese Provisional Patent Publications Nos. 54-20496 and 55-37238. In order to smooth a roughened surface by the second cut, a low discharge energy is preferably used. When a low discharge energy is used, the shape of the workpiece can be easily corrected. However, when a thick workpiece is machine with low discharge energy, a machined wall surface of the workpiece is curved, thereby resulting in a loss of linearity. For example, when a workpiece having a thickness of 60 mm is subjected to the second cut, an internal portion is removed by 20 to 30 µm from the edge of the machined wall surface, thereby often resulting in a loss of linearity of the cut surface.

When the discharge energy is increased, the linearity of the cut surface can be improved. However, the wire vibrates by discharge pressure and escapes from the machined wall surface. As a result, sufficient shape correction cannot be performed.

For this reason, extensive studies and experiments have been made on the second cut process. It has been found by the inventors, in accordance with the present invention, that the above drawback could be eliminated or reduced by decreasing the average machining voltage during the second cut operation.

According to the present invention there is provided an electric discharge machining control circuit having a pulse oscillation circuit, an electric discharge machining circuit operable to charge a capacitor through a switching element which is turned on/off in response to an oscillated pluse from said pulse oscillation control circuit and to discharge a machining charge current between a wire electrode and a workpiece, and a short-circuit detector for comparing a machining voltage between the wire electrode and the workpiece with a reference voltage and for detecting a short circuit between the wire electrode and the workpiece in dependence upon the comparison so that a numerical control device will cause said pulse oscillation control circuit to stop generating the oscillated pulse when said short-circuit detector produces a short-circuit detection signal, the electric discharge machining control circuit being operable to perform a second, finishing, cut of the workpiece with a lower discharge energy than a first rough cut, characterised in that the electric discharge machining control circuit is operable, for the second cut of the workpiece, to decrease the average machining voltage used to perform the second cut, and the electric discharge machining control circuit further comprises a reference voltage switching circuit operative in response to a second-cut instruction signal to decrease the reference voltage applied to the short-circuit detector from a value for the first rough cut to a value enough to prevent an error in determining an occurrence of short-circuit during the second cut.

By decreasing the average machining voltage for the second cut, it is made easier to perform shape correction, roughened surface smoothing, and removal of any irregularities, thereby allowing the second cut to be performed with highly precise linearity.

There may be provided an interval signal blocking circuit for generating a second cut instruction signal to block an interval signal generated from an interval signal oscillator so as to stop generation of the oscillated pulse at predetermined intervals when the wire electrode is temporarily in contact with the workpiece, or a phenomenon similar to a short circuit between the wire electrode and the workpiece occurs, thereby stabilizing electric discharge machining of the second cut.

Since the reference voltage applied to the short-circuit detector is lowered in response to a second cut instruction signal, a short-circuit detection signal which is caused by a decrease in the average machining voltage will not be generated from the short-circuit detector. Therefore, the average machining voltage is lowered during the second cut operation, so that electric discharge machining can be performed at low energy. The shape of the workpiece can be easily corrected and the roughened cut surface can be smoothened. In addition, the cut wall surface can become linear. The interval signal can be blocked in response to the second cut instruction signal, so that electric discharge machining in the second cut mode can be stabilized.

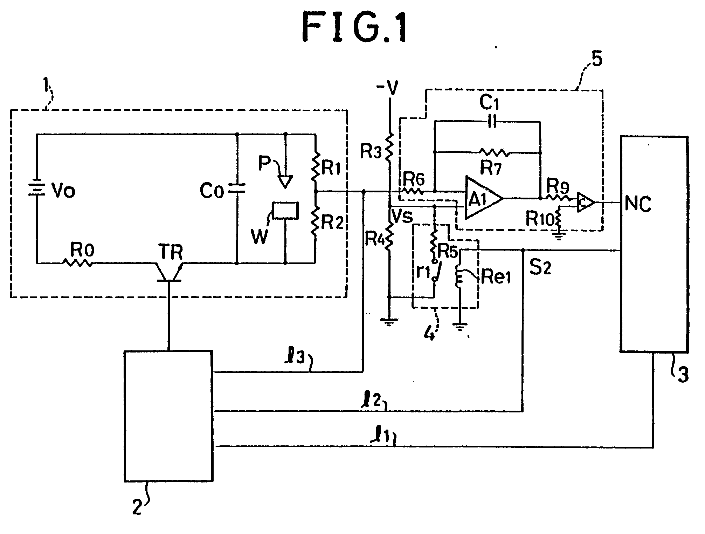

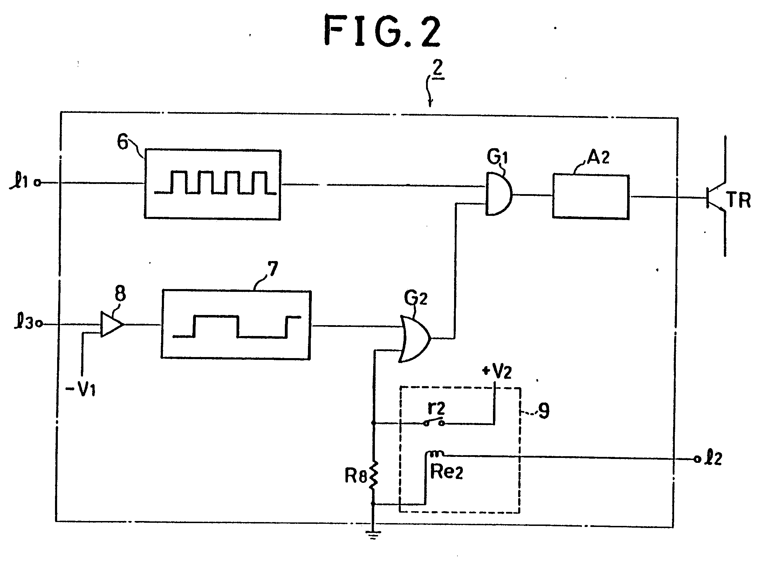

Brief description of the drawings
Figure 1 is a circuit diagram of an electric discharge machining control circuit according to the present invention, and Figure 2 is a circuit diagram of the pulse oscillation control circuit of Figure 1.

Figure 1 is a circuit diagram of an electric discharge machining control circuit. The electric discharge machining control circuit comprises an electric discharge machining circuit 1, a pulse oscillation control circuit 2, a numerical control device 3, a reference voltage switching circuit 4 and a short-circuit detector 5. The pulse oscillation control circuit 2 is illustrated in detail in Figure 2. As compared with the conventional electric discharge machining control circuit, the electric discharge machining control circuit of Figure 1 has inter alia, the additional features of the reference voltage switching circuit 4 and an interval signal blocking circuit (to be described later) in the pulse oscillation control circuit 2 for controlling a second cut.

Referring to Figure 1, reference symbol P denotes a wire electrode; W, a workpiece; V0, a DC power supply for generating a machining voltage; TR, a switching element such as a switching transistor; C0, a capacitor which is subjected to charge/discharge; R1 and R2, resistors, respectively. The resistors R1 and R2 shunt the machining voltage to be applied between the wire electrode P and the workpiece W. A shunt voltage is supplied to a comparator 8 in the pulse oscillation control circuit 2 through a signal line $l_3$, and through a differential amplifier A1 in the short-circuit detector 5. The differential amplifier A1 also receives a reference voltage The reference voltage is switched by the reference voltage switching circuit 4. Reference symbol C denotes a comparator. The comparator C receives an output generated from the differential amplifier A1 and detects a short circuit between the wire electrode P and the workpiece W. Reference symbol Re1 denotes a relay. Energization/deenergization of the relay Re1 causes a change in the reference voltage applied to the short-circuit detector 5.

In the pulse oscillation control circuit 2 shown in Figure 2, reference numeral 6 denotes a pulse oscillator; and 7, an interval signal oscillator. The interval signal oscillator 7 oscillates an interval signal in response to the signal supplied from the comparator 8. Reference symbol G1 denotes an AND gate; G2, an OR gate; A2, an amplifier; and Re2, a relay. When the relay Re2 is disabled, a contact r2 of the relay Re2 is opened, so that the output signal from the interval signal oscillator 7 is gated through the OR gate G2. The oscillated pulse from the pulse oscillator 6 is generated from the pulse oscillation control circuit 2 through the AND gate G1 and the amplifier A2 while the output from the interval signal oscillator 7 is set at H level. As a result, the switching element TR is turned on/off. However, when the relay Re2 is enabled, the signal of H level is normally supplied to the OR gate G2 so that the oscillated pulse from the pulse oscillator 6 is normally produced through the AND gate G1.

In the normal first cut, a signal is not supplied from the numerical control device 3 onto a signal line l2, and the relays Re1 and Re2 will not be enabled, so that electric discharge machining is performed in a conventional manner. In particular, the oscillation pulse is generated from the pulse oscillator 6. At the same time, in normal machining, the interval signal oscillator 7 is normally triggered in response to the signal supplied from the comparator 8 and normally generates the H level signal. As a result, the oscillated pluse from the pulse oscillator 6 is generated from the pulse oscillation control circuit 2 through the AND gate G1 and the amplifier A2. For this reason, the switching element TR in the electric discharge machining circuit 1 repeats the ON/OFF operation. When the switching element TR is turned on, the capacitor C0 is charged through a resistor R0. The charge voltage is then applied between the wire electrode P and the workpiece W. In normal operation, a discharge current flows from the capacitor C0 to a gap between the wire electrode P and the workpiece W in the form of a discharge, thereby performing electric discharge machining. The resistors R1 and R2 connected across the wire electrode P and the workpiee W shunt the machining voltage. A shunt voltage signal is supplied to the comparator 8 in the pulse oscillation control circuit 2 via the signal line l3. The shunt voltage signal is compared with a reference voltage −V1 by the comparator 8. In addition, the shunt voltage signal is supplied to the short-circuit detector 5 which comprises resistors R6 and R7, a capacitor C1, the differential amplifier A1 and the comparator C and is compared with a reference voltage Vs, so as to detect whether or not there is a short circuit between the wire electrode P and the workpiece W. When there is a short circuit between the wire electrode P and the workpiece W, a voltage drops across the wire electrode P and the workpiece W. Therefore, the resultant shunt voltage also drops. The different between the reference voltage Vs and this shunt voltage is amplified by the differential amplifier A1 and is generated as a short-circuit signal from the comparator C. When the short-circuit signal is generated, the numerical control circuit 3 supplies a signal onto a signal line l1, so that the pulse oscillator 6 shown in Figure 2 stops oscillating the pulses, thereby interrupting an electric discharge. On the other hand, when the electrode P is temporarily in contact with the workpiece W, or a phenomenon similar to a short circuit occurs due to insertion of a chip between the electrode P and the workpiece W, a shunt voltage signal obtained by means of the resistors R1 and R2 is supplied to the comparator 8 in the pulse oscillation control circuit 2 via the signal line l3 and is compared with a reference voltage −V1. In response to the output signal from the comparator 8, the interval signal oscillator 7 generates an interval signal having a longer pulse duration than the ON/OFF interval of the oscillated pulse from the pulse oscillator 6. The longer interval signal enables the AND gate G1 through the OR gate G2 while this signal is set at H level, so that the oscillated pulse from the pulse oscillator 6 is supplied to the switching element TR through the amplifier A2. As a result, the switching element TR repeats the ON/OFF operation in a duty cycle of the oscillated pulse supplied from the pulse oscillator 6 while the interval signal is set at H level, thereby controlling temporary short circuit between the electrode P and the workpiece W. On the other hand, in normal operation free from the temporary short circuits, the interval signal oscillator 7 is normally triggered in response to the signal from the comparator 8 and continues to generate the H level signal, thereby applying the oscillated pulse by the pulse oscillator 6 to the tansistor TR.

The foregoing description is associated with the conventional electric discharge machining in the first cut mode.

The operation in the second cut mode according to the present invention will now be described.

When a second cut instruction is generated by the numerical control device 3 or a manual switch, the duty cycle of the oscillated pulse generated by the pulse oscillator 6 changes, the resistance of the resistor R0 is increased to decrease a current, and a capacitance of the capacitor C0 is decreased to decrease the average machining voltage. Means for changing the duty cycle, the resistance and the capacitance are known in other contexts to those skilled in the art, and a detailed description thereof will thus be omitted.

In this manner, when the average machining voltage decreases, the voltage shunted by the resistors R1 and R2 connected across the wire electrode P and the workpiece W also decreases. When a reference voltage Vs does not decrease, the short-circuit detector 5 normally detects the short-circuit detection signal representing a short circuit between the electrode P and the workpiece W, so that the pulse oscillator 6 stops oscillating the pulse in resonse to the signal generated from the numerical control device 3. To prevent this happening in non short circuit conditions, according to the present invention, a reference voltage switching circuit 4 is arranged to decrease the reference voltage Vs. In the second cut mode, the signal is supplied from the numerical control device 3 onto the signal line I2. The relay Re1 in the reference voltage switching circuit 4 is enabled, and the resistor R5 is connected in parallel with the resistor R4 which cooperates with the contact r1 to generate the reference voltage, which is thereby decreased. On the other hand, the signal sent onto the signal line I2 is also supplied to an interval signal blocking circuit 9 so as to operate the relay Re2 therein. The contact r2 of the relay Re2 is then connected to supply the normally high level signal to the AND gate G1 through the OR gate G2. This is because an unstable electric discharge is generated when the interval signal oscillator 7 is operated to generate the interval signal in the second cut mode. However, when the H level signal is normally supplied to the AND gate G1, the interval signal is disabled.

In the above embodiment, the interval signal oscillator 7 comprises a circuit for oscillating a longer interval signal upon detection of a short circuit. However, the interval signal oscillator 7 may count pulses generated by the pulse oscillator 6 and may generate the ON/OFF signal for every predetermined count. In the above embodiment, the interval signal blocking circuit 9 is connected to the output side of the interval signal oscillator 7. However, the interval signal blocking circuit 9 may be inserted at the input side of the comparator 8 so as to normally generate the H level signal from the interval signal oscillator 7.

## Claims

1. An electric discharge machining control circuit having a pulse oscillation circuit (2), an electric discharge machining circuit (1) operable to charge a capacitor (C0) through a switching element (TR) which is turned on/off in response to an oscillated pulse from said pulse oscillation control circuit (2) and to discharge a machining charge current between a wire electrode (P) and a workpiece (W), and a short-circuit detector (5) for comparing a machining voltage between the wire electrode (P) and the workpiece (W) with a reference voltage and for detecting a short circuit between the wire electrode (P) and the workpiece (W) in dependence upon the comparison so that a numerical control device (3) will cause said pulse oscillation control circuit (2) to stop generating the oscillated pulse when said short-circuit detector (5) produces a short-circuit detection signal, the electric discharge machining control circuit being operable to perform a second, finishing, cut of the workpiece (W) with a lower discharge energy than a first rough cut, characterised in that the electric discharge machining control circuit is operable, for the second cut of the workpiece (W), to decrease the average machining voltage used to perform the second cut, and the electric discharge machining control circuit further comprises a reference voltage switching circuit (4) operative in response to a second-cut instruction signal to decrease the reference voltage applied to the short-circuit detector (5) from a value for the first rough cut to a value enough to prevent an error in determining an occurrence of short-circuit during the second cut.

2. A circuit according to Claim 1, characterised in that said pulse oscillation control circuit (2) comprises an interval signal oscillator (7) for generating, during the first rough cut, an interval signal which stops generation of said oscillated pulse as aforesaid at predetermined intervals when a temporary contact between said wire electrode (P) and the workpiece (W) occurs or when a phenomenon similar to a short circuit between said wire electrode (P) and the workpiece (W) occurs, and an interval signal blocking circuit (9) for blocking said interval signal during the second cut in response to said second cut instruction signal.

3. A circuit according to Claim 2, wherein said interval signal oscillator (7) is arranged to count said oscillated pulse and to generate said interval signal which is enabled/disabled for every predetermined count.

4. A circuit according to Claim 2 or 3, wherein said interval signal blocking circuit (9) is arranged to block an output from said interval signal oscillator (7).

5. A circuit according to Claim 2 or 3, wherein said interval signal blocking circuit (9) is arranged to block oscillation of said interval signal oscillator (7).

6. A circuit according to any preceding claim, wherein said electric discharge machining control circuit is operable to change a circuit constant of said electric discharge machining circuit (1) so as to reduce the average machining voltage for the second cut.

7. A circuit according to Claim 6, wherein said circuit constant of said electric discharge machining circuit (1) is capacitance of the capacitor (C0).

**Patentansprüche**

1. Elektrofunkenerosions-Steuerschaltung, die aufweist:

eine Impulsoszillator-Steuerschaltung (2),

eine Elektrofunkenerosions-Bearbeitungsschaltung (1), welche betriebbar ist, um einen Kondensator (C0) durch ein Schaltelement (TR) zu laden, das in Reaktion auf einen Schwingungsimpuls aus der Impulsoszillator-Steuerschaltung (2) ein- und ausgeschaltet wird, un um einen Bearbeitungsladungsstrom zwischen einer Drahtelektrode (P) und einem Werkstück (W) zu entladen, und

einen Kurzschlußdetektor zum Vergleichen einer Bearbeitungsspannung zwischen der Drahtelektrode (P) und dem Werkstück (W) mit einer Referenzspannung und zum Erfassen eines Kurzschlusses zwischen der Drahtelektrode (P) und dem Werkstück (W) in Abhängigkeit von dem Vergleich, so daß eine numerische Steuereinrichtung (3) veranlaßt wird, die Impulsoszillator-Steuerschaltung (2) zum Erzeugen des Schwingungsimpulses zu stoppen, wenn der Kurzschlußdetektor (5) ein Kurzschlußerfassungssignal erzeugt, wobei die Elektrofunkenerosions-Steuerschaltung betriebbar ist, um einen zweiten Schneidvorgang, nämlich einen Endbearbeitungs-Schneidvorgang, an dem Werkstück (W) mit einer geringeren Entladungsenergie als derjenigen eines ersten Schneidvorgangs, nämlich eines Rohbearbeitungs-Schneidvorgangs, durchzuführen, dadurch gekennzeichnet, daß

die Elektrofunkenerosions-Steuerschaltung betriebbar ist, um für den zweiten Schneidvorgang an dem Werkstück (W) die mittlere Bearbeitungsspannung, die benutzt wird, um den zweiten Schneidvorgang durchzuführen, zu verringern, und

die Elektrofunkenerosions-Steuerschaltung ferner eine Referenzspannungs-Schalteinrichtung (4) hat, die betreibbar ist, um in Reaktion auf ein Zweitschnittbefehlssignal die Referenzspannung, die an den Kurzschlußdetektor (5) gelegt wird, von einem Wert für den ersten, nämlich den Rohbearbeitungs-Schneidvorgang, auf einen Wert zu verringern, der ausreicht, um einen Fehler beim Erkennen des Auftretens eines Kurschlusses während des zweiten Schneidvorgangs zu vermeiden.

2. Schaltung nach Anspruch 1, dadurch gekennzeichnet, daß die Impulsoszillator-Steuerschaltung (2) umfaßt:

einen Intervallsignaloszillator (7) zum Erzeugen eines Intervallsignals, das die zuvor angegebene Erzeugung des Schwingungsimpulses während des ersten, nämlich des Rohbearbeitungs-Schneidvorgangs, in vorbestimmten Intervallen stoppt, wenn ein vorübergehender Kontakt zwischen der Drahtelektrode (P) und dem Werkstück (W) auftritt oder wenn ein Phänomen, das einem Kurzschluß zwischen der Drahtelektrode (P) und dem Werkstück (W) ähnlich ist, auftritt, und

eine Intervallsignalblockierungsschaltung (9) zum Blokkieren des Intervallsignals während des zweiten Schneidvorgangs in Reaktion auf das Zweitschnittbefehlssignal.

3. Schaltung nach Anspruch 2, bei der der Intervallsignaloszillator (7) dazu bestimmt ist, die Schwingungsimpulse abzuzählen und das Intervallsignal zu erzeugen, welches für jeden vorbestimmten Zählstand freigegeben/gesperrt wird.

4. Schaltung nach Anspruch 2 oder 3, bei der die Intervallsignalblockierungsschaltung (9) dazu bestimmt ist, ein Ausgangssignal des Intervallsignaloszillators (7) zu blockieren.

5. Schaltung nach Anspruch 2 oder 3, bei der die Intervallsignalblockierungsschaltung (9) dazu bestimmt ist, das Schwingen des Intervallsignaloszillators (7) zu blockieren.

6. Schaltung nach einem der vorhergehenden Ansprüche, bei der die Elektrofunkenerosions-Steuerschaltung betreibbar ist, um eine Schaltungskonstante der Elektrofunkenerosions-Bearbeitungsschaltung (1) zu ändern, um so die mittlere Bearbeitungsspannung für den zweiten Schneidvorgang zu verringern.

7. Schaltung nach Anspruch 6, bei der die Schaltungskonstante der Elektrofunkenerosions-Bearbeitungsschaltung (1) die Kapazität des Kondensators (C0) ist.

**Revendications**

1. Un circuit de commande d'usinage par décharge électrique comprenant un circuit à oscillation d'impulsions (2), un circuit d'usinage par décharge électrique (1) pouvant être commandé pour charger un condensateur (C0) par l'intermédiaire d'un élément de commutation (TR) qui est rendu passant/non passant en réponse à une impulsion d'oscillation provenant dudit circuit de commande à oscillation d'impulsions (2) et pour décharger un courant de charge d'usinage entre une électrode à fil (P) et une pièce d'ouvrage (W), et un détecteur de court-circuit (5) pour comparer une tension d'usinage entre l'électrode à fil (P) et la pièce d'ouvrage (W) à une tension de référence et pour détecter un court-circuit entre l'électrode à fil (P) et la pièce d'ouvrage (W) en fonction de la comparaison de façon qu'un dispositif de commande numérique (3) amènera ledit circuit de commande à oscillation d'impulsios (2) à arrêter de produire l'implusion d'oscillation lorsque ledit détecteur de court-circuit (5) produit un signal de détection de court-circuit, le circuit de commande d'usinage par décharge électrique pouvant être commandé pour effectuer une seconde découpe de finissage de la pièce d'ouvrage (W) avec une énergie inférieure de décharge à une première découpe grossière, caractérisé en ce que le circuit de commande d'usinage par décharge électrique peut être commandé, pendant la seconde découpe de la pièce d'ouvrage (W) pour diminuer la tension moyenne d'usinage utilisée pour effectuer la seconde découpe, et en ce que le circuit de commande d'usinage par décharge électrique comprend en outre un circuit de commutation de tension de référence (4) agissant en réponse à une signal d'instruction de seconde découpe pour diminuer la tension de référence appliquée au détecteur de court-circuit (5) à partir d'une valeur pour la première découpe grossière jusqu'à une valeur suffisante pour empécher une erreur dans le détermination d'une apparition de court-circuit durant la seconde découpe.

2. Un circuit selon la revendication 1, caractérisé en ce que ledit circuit de commande à oscillation d'impulsions (2) comprend un oscillateur de signal d'intervalle (7) pour produire durant la première découpe grossière un signal d'intervalle qui arrête la production de ladite impulsion d'oscillation comme indiqué précédemment aux intervalles prédéterminés lorsqu'un contact temporaire entre ladite électrode à fil (P) et la pièce d'ouvrage (W) se produit ou lorsqu'un phénomène similaire à un court-circuit entre ladite électrode à fil (P) et la pièce d'ouvrage (W) se produit, et un circuit de blocage de signal d'intervalle (9) pour bloquer ledit signal d'intervalle durant la seconde découpe en réponse audit signal d'instruction de seconde découpe.

3. Un circuit selon la revendication 2, dans lequel ledit oscillateur de signal d'intervalle (7) est prévu pour compter ladite impulsion d'oscillation et pour produire ledit signal d'intervalle qui est activé/désactivé pour chaque comptage prédéterminé.

4. Un circuit selon la revendication 2 ou 3, dans lequel ledit circuit de blocage de signal d'intervalle (9) est prévu pour bloquer une sortie provenant dudit oscillateur de signal d'intervalle (7).

5. Un circuit selon la revendication 2 ou 3, dans lequel ledit circuit de blocage de signal d'intervalle (9) est prévu pour bloquer l'oscillation dudit oscillateur de signal d'intervalle (7).

6. Un circuit selon une revendication précédente quelcoque, dans lequel ledit circuit de commande d'usinage par décharge électrique peut être commandé pour modifier une constante de circuit dudit circuit d'usinage par décharge électrique (1) de façon à réduire la tension moyenne d'usinage pendant la seconde découpe.

7. Un circuit selon la revendication 6, dans lequel ladite constante de circuit dudit circuit d'usinage par décharge électrique (1) est une capacité du condensateur (C0).

# FIG.1

FIG.2